# EUROPEAN PATENT APPLICATION

(11) **EP 4 825 798 A1**
(43) Date of publication of application: **21.10.2026**
(21) Application number: 24904256.5
(22) Date of filing: 10.12.2024
(51) Int. Cl.: C01B 25/30

(54) **MANUFACTURING METHOD FOR LITHIUM PHOSPHATE**

(30) Priority: 15.12.2023 KR 20230183493
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: PARK, Woonkyoung, Pohang-si, Gyeongsangbuk-do 37834 (KR); PARK, Jae Sin, Pohang-si, Gyeongsangbuk-do 37673 (KR); KANG, Hee-Soo, Pohang-si, Gyeongsangbuk-do 37673 (KR); YANG, Heok, Pohang-si, Gyeongsangbuk-do 37655 (KR)
(74) Representative: Pfenning, Meinig & Partner mbB
(86) International application number: PCT/KR2024/020223
(87) International publication number: WO 2025/127691

(57) **Abstract**

A manufacturing method of lithium phosphate includes: introducing a lithium-containing solution into a reactor; introducing an alkaline material and a phosphorus supplying material into the reactor; stirring the lithium-containing solution into which the alkaline material and the phosphorus supplying material are introduced to grow lithium phosphate nucleus particles and obtain a lithium phosphate slurry; and separating the slurry into solid and liquid to obtain the lithium phosphate, in which one of the alkaline material and the phosphorus supplying material is introduced into an upper portion of the reactor, and the other is introduced into a lower portion of the reactor.

## Description

### [Technical Field]

The present disclosure relates to a manufacturing method of lithium phosphate.

### [Background]

Recently, lithium secondary batteries have been rapidly growing in the field of electronic communication devices such as tablet PCs and smart phones, application fields thereof have expanded to include energy for electric vehicles, and efforts to research and develop increasing energy storage capacity are becoming more specific. Due to the growth of the lithium secondary battery market, the amount of lithium (Li), which is a main raw material for cathode materials, is gradually increasing.

Sources of lithium include minerals, brine, and sea water. Among these, minerals include spodumene, petalite, and lepidolite, which contain relatively large amounts of lithium as about 1 to 1.5 wt%. However, in order to extract lithium from minerals, processes such as flotation, high temperature heating, crushing, acid mixing, extraction, purification, concentrate, and precipitation should be performed, so there is a problem in that the recovery procedure is complicated, the cost is high due to high energy consumption, and the environment is severely polluted due to the use of acid in the process of extracting the lithium.

Currently, the lithium is mainly extracted from brine, which is produced from natural salt lakes, and salts such as Mg, Ca, B, Na, K, and SO₄ as well as lithium are dissolved.

Meanwhile, various attempts are being made to extract the lithium from such brine. For example, the lithium is concentrated to an extractable concentration using a natural evaporation method and extracted as lithium chloride, lithium sulfate, lithium carbonate, lithium hydroxide, lithium fluoride, and lithium phosphate.

Among these, the lithium phosphate is a compound with low solubility and the natural evaporation method is known as the easiest method to extract the dissolved lithium.

However, due to the low solubility of lithium phosphate, the nucleation rate increases with changes in pH during the manufacturing of the lithium phosphate, resulting in the production of fine particles. This leads to the increase in the impurity content due to the high moisture content during the solid-liquid separation.

Therefore, there is a need to develop a manufacturing method of lithium phosphate that may control the particle size of the lithium phosphate to lower the moisture content and lower the impurities.

### [Detailed Description of the Invention]

### [Technical Problem]

The present disclosure attempts to provide a manufacturing method of lithium phosphate capable of controlling a particle size of lithium phosphate, having a low moisture content, and a low impurity content.

### [Technical Solution]

According to an aspect of the present disclosure, a manufacturing method of lithium phosphate includes: introducing a lithium-containing solution into a reactor; introducing an alkaline material and a phosphorus supplying material into the reactor; stirring the lithium-containing solution into which the alkaline material and the phosphorus supplying material are introduced to grow lithium phosphate nucleus particles and obtain a lithium phosphate slurry; and separating the slurry into solid and liquid to obtain the lithium phosphate, in which one of the alkaline material and the phosphorus supplying material is introduced into an upper portion of the reactor, and the other is introduced into a lower portion of the reactor.

### [Advantageous Effects of the Invention]

The manufacturing method of lithium phosphate according to the present disclosure has the advantage of easy control of the particle size of the lithium phosphate. In addition, it is possible to easily manufacture the lithium phosphate with low moisture content and low impurity content.

### [Brief Description of Drawings]

FIG. 1 is a diagram illustrating a reactor according to some embodiments of the present disclosure.
FIGS. 2 and 3 are diagrams illustrating pH gradients within a reactor in the manufacturing method of lithium phosphate according to some embodiments of the present disclosure.
FIG. 4 is a diagram illustrating results of analyzing a D₁₀ particle size of lithium phosphate particles manufactured according to Examples and Comparative Examples.
FIG. 5 is a diagram illustrating a reactor according to Comparative Example.

### [Mode for Carrying Out the Invention]

Hereinafter, an exemplary embodiment of the present disclosure is described in detail. However, examples are provided by way of example, and the present disclosure is not limited by examples, but is defined by only the scope of claims to be described below.

Throughout the present specification, when any member is referred to as being positioned "on" another member, it includes not only a case in which any member and another member are in contact with each other, but also a case in which the other member is interposed between any member and another member.

In the present disclosure, unless explicitly described to the contrary, "comprising" any components will be understood to imply the inclusion of other components rather than the exclusion of any other components.

According to an aspect of the present disclosure, a manufacturing method of lithium phosphate includes: introducing a lithium-containing solution into a reactor; introducing an alkaline material and a phosphorus supplying material into the reactor; stirring the lithium-containing solution into which the alkaline material and the phosphorus supplying material are introduced to grow lithium phosphate nucleus particles and obtain a lithium phosphate slurry; and separating the slurry into solid and liquid to obtain the lithium phosphate, in which one of the alkaline material and the phosphorus supplying material is introduced into an upper portion of the reactor, and the other is introduced into a lower portion of the reactor.

The manufacturing method of lithium phosphate according to the present disclosure has an advantage in that it is easy to control the particle size of the lithium phosphate by forming a pH gradient in a reactor. In addition, the manufacturing method of lithium phosphate has an advantage in that lithium phosphate having a low moisture content and a low content of impurities may be manufactured.

The manufacturing method of lithium phosphate according to the present disclosure includes introducing a lithium-containing solution into the reactor.

The lithium-containing solution may be at least one selected from the group consisting of a solution extracted from lithium dissolved in the ocean, a solution generated in a process of recycling spent lithium batteries, a solution extracted from lithium ore, brine, lithium-containing hot spring water, lithium-containing groundwater, and lithium-containing brine.

In an exemplary embodiment of the present disclosure, the lithium-containing solution may be brine.

The reactor may be a continuous reactor, a batch reactor, or a semi-batch reactor, but its form is not particularly limited as long as an alkaline material is introduced into one of an upper portion and a lower portion of the reactor, and a phosphorus supplying material is introduced into the remainder.

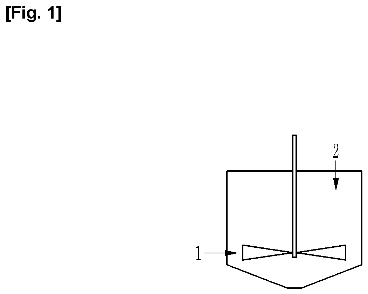

The manufacturing method of lithium phosphate according to the present disclosure includes introducing an alkaline material and a phosphorus supplying material into the reactor, in which one (2) of the alkaline material and the phosphorus supplying material is introduced into the upper portion of the reactor, and the remainder (1) is introduced into the lower portion of the reactor (see FIG. 1).

In the present disclosure, the "upper portion of the reactor" may refer to a space within a range of 50% in a longitudinal direction from the upper portion of the internal space of the reactor based on the cross-section of the internal space of the reactor.

In the present disclosure, the "lower portion of the reactor" may refer to a space within a range of 50% in a longitudinal direction from the lower portion of the internal space of the reactor based on the cross-section of the internal space of the reactor.

In another exemplary embodiment of the present disclosure, in the introducing of the alkaline material and the phosphorus supplying material into the reactor; the alkaline material and the phosphorus supplying material may be introduced simultaneously.

Without wishing to be limited by theory, it is known that phosphate ions are formed as [H₂PO₄]⁻ ion, [HPO₄]²⁻ ion, [PO4]³⁻ ion depending on the change in pH of the surrounding area, and accordingly, the following reaction is formed in the lithium-containing solution.

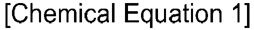

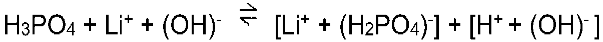

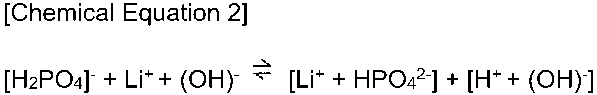

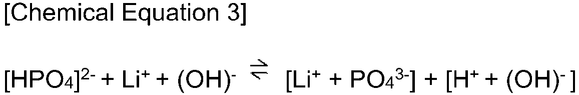

Accordingly, compounds in the form of LiH₂PO₄, Li₂HPO₄, and Li₃PO₄ exist depending on the solubility of the lithium compound, and the precipitation behavior appears depending on the solubility of each compound. In particular, in the case of Li₃PO₄, the precipitation reaction occurs quickly in the alkaline region due to its low solubility, and in the case of other lithium compounds, precipitation occurs under conditions of the high lithium content solution and pH conditions due to its high solubility.

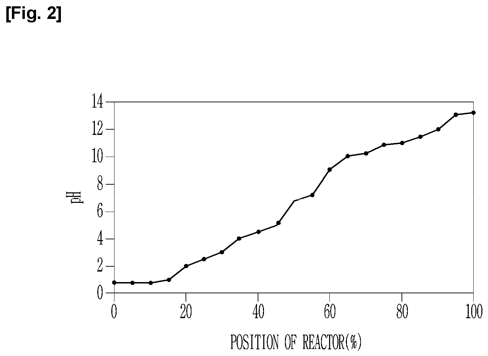

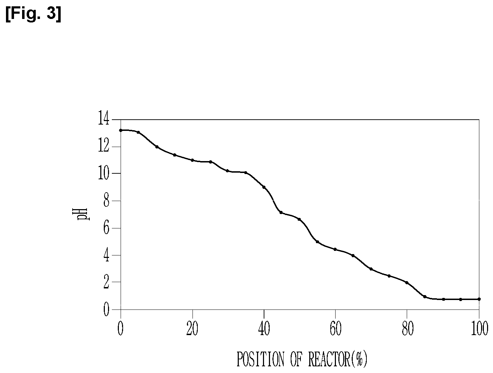

Therefore, in the present disclosure, the alkaline material and the phosphorus supplying material are simultaneously introduced into the upper portion and the lower portion of the reactor, respectively, so the lithium-containing solution in the reactor, that is, has a pH gradient (see FIGS. 2 and 3).

Specifically, FIG. 2 is a diagram illustrating the pH gradient when the alkaline material is introduced into the upper portion and the phosphorus supplying material is introduced into the lower portion, and FIG. 3 is a diagram illustrating the pH gradient when the same process as FIG. 2 is performed, but the alkaline material is introduced into the lower portion and the phosphorus supplying material is introduced into the upper portion.

By forming the lithium-containing solution to have the pH gradient, the rapid contact between phosphate ions and alkaline ions may be controlled to alkalize the pH, and the nucleation and particle growth rate of the lithium phosphate may be controlled.

In this way, when the lithium-containing solution has a pH gradient, nucleation may occur under conditions of pH 4 or higher, and the size of the particles may gradually grow as the generated nuclei move toward a higher pH within the lithium-containing solution.

In another exemplary embodiment of the present disclosure, the stirring of the lithium-containing solution to which the alkaline material and the phosphorus supplying material are added to grow the lithium phosphate nucleus particles and obtain the lithium phosphate slurry may include the forming of the pH gradient within the reactor.

Specifically, the pH of the lithium-containing solution to which the alkaline material and the phosphorus supplying material are added may have a gradient of 0.7 to 13.2.

In another exemplary embodiment of the present disclosure, the alkaline material and the phosphorus supplying material may be introduced at a distance of 40 to 100%, preferably 60 to 100%, and more preferably 80 to 100% with respect to a height of the reactor. Since nuclei of the reaction precipitate of the alkaline material and the phosphorus supplying material may begin to be generated under conditions of pH 4.5 or higher, it is preferable that the alkaline material and the phosphorus supplying material is introduced at a distance within the above range.

When the alkaline material and the phosphorus supplying material are spaced apart from each other within the above range with respect to the height of the reactor, the pH gradient effect is excellent, which is preferable.

In another exemplary embodiment of the present disclosure, the alkaline material and the phosphorus supplying material may be introduced at a distance of 0 to 100% with respect to a width of the reactor.

When the alkaline material and the phosphorus supplying material are spaced apart from each other within the above range with respect to the width of the reactor, the pH gradient effect is excellent, and the phenomenon of the alkali ion and the phosphorus ion rapidly coming into contact with each other and the pH of the lithium-containing solution becoming alkaline as a whole may be suppressed, which is preferable.

In another exemplary embodiment of the present disclosure, an introduction time of the alkaline material and the phosphorus supplying material may be 10 to 120 minutes, preferably 20 to 100 minutes, and more preferably 30 to 60 minutes.

When the introduction time of the alkaline material and the phosphorus supplying material satisfies the above range, the growth of the lithium phosphate particles is sufficient, which is preferable.

In another exemplary embodiment of the present disclosure, an introduction rate of the alkaline material may be introduced at 12.6 to 23.3 g/hr/L or 1.26 to 11.65 mL/hr/L, but is not limited thereto. Specifically, when the alkaline material is introduced in a powder form, the alkaline material may be introduced at 12.6 to 23.3 g/hr/L, and when the alkaline material is introduced in a liquid form, the alkaline material may be introduced at 1.16 to 11.65 mL/hr/L, but is not limited thereto.

In another exemplary embodiment of the present disclosure, an introduction rate of the phosphorus supplying material may be introduced at 12.6 to 25.1 g/hr/L or 6.8 to 13.7 mL/hr/L, but is not limited thereto. Specifically, when the phosphorus supplying material is introduced in powder form, the phosphors supplying material may be introduced at 12.6 to 25.1 g/hr/L, and when the phosphorous supplying material is introduced in a liquid form, the phosphorus supplying material may be introduced at 6.8 to 13.7 mL/hr/L, but is not limited thereto.

When the introduction rates of the alkaline material and the phosphorus supplying material satisfy the above range, it is preferable that the pH gradient is easily formed.

The phosphorus supplying material may be introduced into the lithium-containing solution at a concentration of 0.7 to 1.3 in an equivalent ratio.

The alkaline material may be introduced into the lithium-containing solution at a concentration of 0.7 to 1.3 in an equivalent ratio.

In another embodiment of the present invention, the alkaline material may include, but is not limited to, at least one selected from the group consisting of NaOH, KOH, and LiOH.. Specifically, the alkaline material may be NaOH.

In another exemplary embodiment of the present disclosure, the phosphorus supplying material may be at least one selected from the group consisting of phosphoric acid, phosphate, and phosphoric acid aqueous solution.

The manufacturing method of lithium phosphate according to the present disclosure includes stirring the lithium-containing solution into which the alkaline material and the phosphorus supplying material are added to grow lithium phosphate nucleus particles and obtain a lithium phosphate slurry.

In the manufacturing method of lithium phosphate according to the present disclosure, when the alkaline material and the phosphorus supplying material are added, one of the alkaline material and the phosphorus supplying material is added to the upper portion of the reactor, and the other is added to the lower portion of the reactor, thereby forming the pH gradient in the reactor. As a result, it is possible to perform the reaction by separating the nucleation section and the growth section of the lithium phosphate, so that the lithium phosphate particle size may be greatly increased, and the moisture content may be reduced during the solid-liquid separation described later.

The alkaline material and the phosphorus supplying material may be added to the upper portion and the lower portion of the reactor, respectively, depending on the form of the supplied material.

For example, when the alkaline material is in the powder form and the phosphorus supplying material is in the liquid form, the alkaline material may be supplied to the upper portion of the reactor and the phosphorus supplying material may be supplied to the lower portion of the reactor.

In another exemplary embodiment of the present disclosure, the alkaline material may be supplied to the upper portion of the reactor and the phosphorus supplying material may be supplied to the lower portion of the reactor.

Specifically, in FIG. 1, (1) may be the phosphorus supplying material and (2) may be the alkaline material.

In another exemplary embodiment of the present disclosure, in the stirring of the lithium-containing solution into which the alkaline material and the phosphorus supplying material are added to grow lithium phosphate nucleus particles and obtain the lithium phosphate slurry, the stirring may be performed at 30 to 500 RPM, preferably 50 to 350 RPM, and more preferably 80 to 250 RPM.

When the stirring is performed under the above conditions, the pH gradient may be stably maintained, which is preferable.

In another exemplary embodiment of the present disclosure, the stirring of the lithium-containing solution into which the alkaline material and the phosphorus supplying material are added to grow the lithium phosphate nucleus particles and obtain the lithium phosphate slurry may be performed at a temperature of 0 to 90°C, preferably 5 to 70°C, and more preferably 10 to 60°C. When the alkaline material and the phosphorus supplying material react, neutralization heat of about 50 to 60°C may be generated, so the obtaining of the lithium phosphate slurry may be performed within the above temperature range.

The manufacturing method of lithium phosphate according to the present disclosure includes obtaining the lithium phosphate by separating the slurry into the solid and liquid.

The solid-liquid separation may be performed using a suction device, a filter press, or a centrifuge connected to a vacuum pump.

In another exemplary embodiment of the present disclosure, the obtaining of the lithium phosphate by separating the slurry into the solid and liquid may include obtaining a cake containing lithium phosphate particles by separating the slurry into the solid and liquid; and washing the cake containing the lithium phosphate particles.

When the lithium phosphate slurry is separated into the solid and liquid to obtain the cake containing lithium phosphate particles, a water content in which the extracted filtrate and other residual impurities coexist in the cake may remain.

Therefore, in order to increase the content of the lithium phosphate, the washing process is performed. Since the lithium phosphate manufactured by the manufacturing method of lithium phosphate according to the present disclosure has relatively larger particles than the lithium phosphate manufactured by the conventional method, the filtration efficiency increases, and the amount of residual water decreases, so there is an advantage in that the content of impurities remaining in the cake decreases.

In another exemplary embodiment of the present disclosure, the washing may be performed at a temperature of 10 to 90°C, preferably 30 to 80°C, and more preferably 40 to 70°C.

It is known that the lithium phosphate has a solubility of 0.39 g/L at 20°C. When the washing is performed within the above temperature range, the phenomenon of the lithium phosphate loss due to dissolution during the washing may be suppressed while the efficiency of removing other impurities may be increased, which is preferable.

In another exemplary embodiment of the present disclosure, the washing may be performed using 100 to 600 parts by weight, preferably 200 to 600 parts by weight, and more preferably 250 to 600 parts by weight of washing water based on 100 weights of the entire cake containing the lithium phosphate particles.

When the washing is performed using the washing water in the above range, the removal rate of impurities such as K, Na, B, and S is increased, which is preferable.

The washing may be performed using a washing machine, but is not limited thereto.

The washing water may be distilled water, and the washing may be performed two or more times, but is not limited thereto.

The lithium phosphate cake may have a moisture content of 25% or less.

The lithium phosphate manufactured by the manufacturing method of lithium phosphate according to the present disclosure may have a D₁₀ of 5 µm or more, specifically 8 µm or more, and more specifically 11 µm or more.

The manufacturing method of lithium phosphate according to the present disclosure adjusts the pH gradient within the reactor by physically adding the phosphorus supplying material and the alkaline material, which are added to precipitate the lithium phosphate from the lithium-containing solution, at different locations, thereby separating the nucleation section and growth section of the lithium phosphate and causing the reaction, thereby allowing the lithium phosphate particles to grow significantly. Accordingly, the moisture content and impurity content of the lithium phosphate cake may be reduced, thereby having the advantage of reducing the burden of the process.

The following examples illustrate the present disclosure in more detail. However, the following Examples are only exemplary embodiments of the present disclosure, and the present disclosure is not limited to the following Examples.

### Example

Phosphoric acid (75% by weight) in a brine in which lithium having the composition as shown in Table 1 below was dissolved is introduced into a lower portion of a large reactor as illustrated in FIG. 1 so that it is 1 equivalent, and stirring was performed at 80 RPM for 1 hour while NaOH is simultaneously introduced (2) into the upper portion of the reactor so that it is 1 equivalent.

In addition, the phosphoric acid and the NaOH were separated by 80% with respect to the height of the reactor (phosphoric acid was added at a position of 20% from the lower portion of the reactor).

**(Table 1)**

| Division (g/L) | Li | S | Ca | Mg | B | K | Na | pH |
|---|---|---|---|---|---|---|---|---|
| Brine | 4.091 | 1.027 | 0.008 | 0.002 | 1.072 | 38.53 | 94.37 | 10.85 |

The lithium phosphate slurry generated through the stirring was separated into the solid and liquid to obtain the lithium phosphate cake.

In order to remove impurities in the lithium phosphate cake, as shown in Table 3 below, 300, 400, 500, and 600 parts by weight (threefold to sixfold the cake weight) of distilled water were used as washing water for 100 parts by weight of the lithium phosphate cake, and the washing was performed at temperature conditions of 20°C and 60°C, respectively.

In this case, the lithium phosphate cake was put in the washing machine and stirred to perform the washing.

### Comparative Example 1

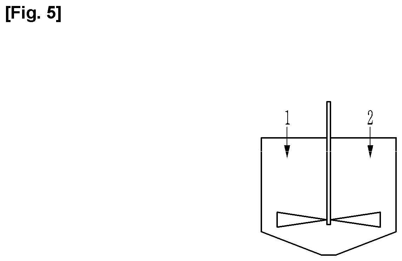

Phosphoric acid (75% by weight) in a brine in which lithium having a composition as shown in Table 1 above was dissolved is introduced (1) into an upper portion of a large reactor as illustrated in FIG. 5 so that it is 1 equivalent, and stirring was performed at 80 RPM for 1 hour while NaOH is simultaneously introduced (2) into the upper portion so that it is 1 equivalent. In this case, the introduction speed of the phosphoric acid and NaOH and the reaction temperature were the same as in Example.

The lithium phosphate slurry generated through the stirring was separated into the solid and liquid to obtain the lithium phosphate cake.

### Comparative Example 2

Phosphoric acid (75 weight%) in a brine in which lithium having a composition as shown in Table 2 below was dissolved is introduced into an upper portion of a large reactor similar to Comparative Example 1 so it is 1 equivalent, and stirring was simultaneously performed for 1 hour while NaOH was introduced in an amount of 1 equivalent in bulk. In this case, the introduction rate and reaction temperature of the phosphoric acid were the same as in Example.

**(Table 2)**

| Division (g/L) | Li | S | Ca | Mg | B | K | Na | pH |
|---|---|---|---|---|---|---|---|---|
| Brine | 4.275 | 1.042 | 0.007 | 0.011 | 1.139 | 40.90 | 97.19 | 10.27 |

The lithium phosphate slurry generated through the stirring was separated into the solid and liquid to obtain the lithium phosphate cake.

### Experimental Example

### (1) Analysis of moisture content and particle size of lithium phosphate cake

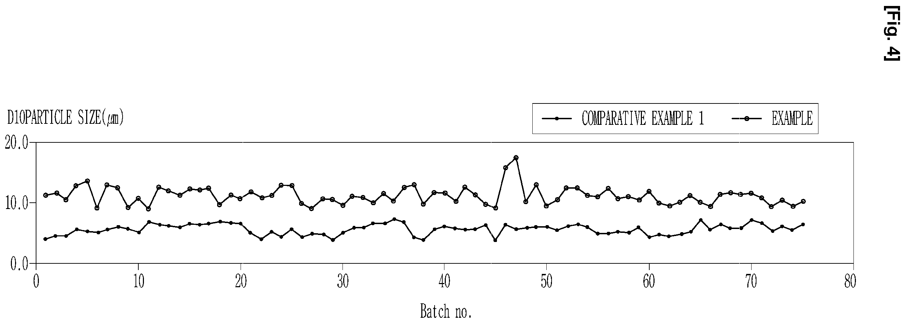

The results of analyzing the moisture content and particle size of the lithium phosphate cake manufactured according to Examples and Comparative Examples were illustrated in FIG. 4 and Table 3 below.

In addition, the pH gradient according to the position inside the reactor was measured during the stirring process in Example, and the results are illustrated in FIG. 2.

In this case, the moisture content was measured by measuring the change in weight after drying at 105°C for 24 hours, and was measured using a laser diffraction method.

**(Table 3)**

| Division | Moisture content (%) | Analysis of particle size (µm) | | | |
|---|---|---|---|---|---|
| | | D₁₀ | D₅₀ | D₉₀ | D₁₀₀ |
| Example | <25% | 11.15 | 22.40 | 37.41 | 79.30 |
| Comparative Example 1 | <35% | 4.61 | 13.89 | 27.78 | 39.82 |
| Comparative Example 2 | 52% | 0.9 | 7.0 | 49.6 | 76.30 |

Specifically, FIG. 4 illustrates a D₁₀ particle size according to the number of times the method of the following Example and Comparative Example 1 was repeated. Referring to FIG. 4, it was confirmed that Example had the characteristics of increasing the D₁₀ particle size. In addition, referring to Table 2, it may be confirmed in Example that the overall particle size of the lithium phosphate particles increased, and the moisture content also decreased to 25% or less.

### (2) Composition of lithium phosphate powder according to washing process

In order to remove impurities in the lithium phosphate cake obtained according to Example, as shown in Table 3 below, 300 to 600 parts by weight (threefold to sixfold the cake weight) of distilled water were used as washing water for 100 parts by weight of the lithium phosphate cake, and the washing was performed at temperature conditions of 20°C and 60°C, respectively.

In this case, the lithium phosphate cake was introduced into the washing machine and stirred to perform the washing, and the ICP analysis results of the lithium phosphate cake before and after the washing were shown in Table 4 below.

**(Table 4)**

| Division (wt%) | | Li | S | P | Ca | Mg | B | K | Na |
|---|---|---|---|---|---|---|---|---|---|
| Before washing | | 14.77 | 0.314 | 21.57 | 0.026 | 0.027 | 0.783 | 0.763 | 3.147 |
| Threefold | 20°C | 16.11 | 0.266 | 23.54 | 0.026 | 0.026 | 0.683 | 0.159 | 1.120 |
| | 60°C | 16.67 | 0.133 | 24.32 | 0.026 | 0.027 | 0.439 | 0.088 | 0.612 |
| Fourfold | 20°C | 16.15 | 0.239 | 23.62 | 0.025 | 0.026 | 0.637 | 0.107 | 0.880 |
| | 60°C | 16.56 | 0.120 | 24.28 | 0.027 | 0.028 | 0.404 | 0.079 | 0.496 |
| Fivefold | 20°C | 16.24 | 0.245 | 23.60 | 0.027 | 0.026 | 0.625 | 0.105 | 0.814 |
| | 60°C | 16.88 | 0.109 | 24.40 | 0.027 | 0.028 | 0.376 | 0.058 | 0.375 |
| Sixfold | 20°C | 16.32 | 0.234 | 23.60 | 0.026 | 0.027 | 0.609 | 0.098 | 0.745 |
| | 60°C | 16.76 | 0.111 | 24.36 | 0.026 | 0.026 | 0.369 | 0.054 | 0.359 |

Referring to Table 4 above, it can be confirmed that the removal rate increases in the order of K, Na, B, and S as the amount of washing water increases. In addition, it can be confirmed that the removal rate increases when washing under a temperature condition of 60°C. This means that the impurities in the lithium phosphate cake recovered from the brine in which a lot of dissolved chlorides, such as KCl and NaCl, are dissolved, are well washed as highly soluble compounds as the temperature of the washing water increases.

In addition, in order to remove the impurities in the lithium phosphate cake obtained according to Comparative Example 2, the washing was performed under conditions of 20°C using 600 parts by weight of distilled water as washing water for 100 parts by weight of the lithium phosphate cake.

In this case, the lithium phosphate cake according to Comparative Example 2 was put in the same washing machine as in Example and stirred to perform the washing, and the results of the ICP analysis of the lithium phosphate cake before and after the washing were shown in Table 5 below.

**(Table 5)**

| Division (wt.%) | Li | S | P | Ca | Mg | B | K | Na |
|---|---|---|---|---|---|---|---|---|
| Before washing | 9.34 | 0.26 | 13.41 | 0.010 | 0.0005 | 0.55 | 4.47 | 14.90 |
| After washing 20°C | 15.31 | 0.16 | 21.37 | 0.096 | 0.0330 | 0.49 | 1.07 | 4.48 |

Referring to Tables 3 to 5 above, it can be seen that the lithium phosphate cake manufactured according to Comparative Example 2 has a much smaller particle size based on D₁₀ compared to Examples, has a high moisture content, and has a high impurity content even after the washing.

The present disclosure is not limited to the exemplary embodiments, but may be manufactured in a variety of different forms, and the present disclosure may be manufactured in a variety of different forms, and those of ordinary skill in the art to which the present disclosure pertains will understand that the present disclosure may be implemented in other specific forms without changing the technical spirit or essential features of the present disclosure. Therefore, it is to be understood that the exemplary embodiments described above are illustrative rather than being restrictive in all aspects.

## Claims

1. A manufacturing method of lithium phosphate, comprising:
introducing a lithium-containing solution into a reactor;
introducing an alkaline material and a phosphorus supplying material into the reactor;
stirring the lithium-containing solution into which the alkaline material and the phosphorus supplying material are introduced to grow lithium phosphate nucleus particles and obtain a lithium phosphate slurry; and
separating the slurry into solid and liquid to obtain the lithium phosphate,
wherein one of the alkaline material and the phosphorus supplying material is introduced into an upper portion of the reactor, and the other is introduced into a lower portion of the reactor.

2. The manufacturing method of claim 1, wherein:
in the introducing of the alkaline material and the phosphorus supplying material into the reactor,
the alkaline material and the phosphorus supplying material are introduced at the same time.

3. The manufacturing method of claim 1, wherein:
the alkaline material and the phosphorus supplying material are introduced at a distance of 40 to 100% relative to a height of the reactor.

4. The manufacturing method of claim 3, wherein:
the alkaline material and the phosphorus supplying material are introduced at a distance of 60 to 100% relative to the height of the reactor.

5. The manufacturing method of claim 1, wherein:
the alkaline material and the phosphorus supplying material are introduced at a distance of 0 to 100% relative to a width of the reactor.

6. The manufacturing method of claim 1, wherein:
the alkaline material is introduced into the upper portion of the reactor, and the phosphorus supplying material is introduced into the lower portion of the reactor.

7. The manufacturing method of claim 1, wherein:
in the stirring of the lithium-containing solution into which the alkaline material and the phosphorus supplying material are introduced to grow the lithium phosphate nucleus particles and obtain the lithium phosphate slurry, the stirring is performed at 30 to 500 RPM.

8. The manufacturing method of claim 1, wherein:
the stirring of the lithium-containing solution into which the alkaline material and the phosphorus supplying material are introduced to grow the lithium phosphate nucleus particles and obtain the lithium phosphate slurry,
includes forming a pH gradient in the reactor;

9. The manufacturing method of claim 1, wherein:
an introduction time of the alkaline material and the phosphorus supplying material is 10 to 120 minutes.

10. The manufacturing method of claim 1, wherein:
the stirring of the lithium-containing solution into which the alkaline material and the phosphorus supplying material are introduced to grow the lithium phosphate nucleus particles and obtain the lithium phosphate slurry is performed at a temperature of 0 to 90°C.

11. The manufacturing method of claim 1, wherein:
the separating of the slurry into the solid and liquid to obtain the lithium phosphate includes:
obtaining a cake containing lithium phosphate particles by separating the slurry into the solid and liquid; and
washing the cake containing the lithium phosphate particles.

12. The manufacturing method of claim 11, wherein:
the washing is performed at a temperature of 10 to 90°C.

13. The manufacturing method of claim 11, wherein:
the washing is performed using 100 to 600 parts by weight of washing water based on 100 parts by weight of the entire cake containing the lithium phosphate particles.

14. The manufacturing method of claim 1, wherein:
the lithium-containing solution is saline water.

15. The manufacturing method of claim 1, wherein:
the alkaline material includes at least one selected from the group consisting of NaOH, KOH, and LiOH.

16. The manufacturing method of claim 1, wherein:
the phosphorus supplying material is at least one selected from the group consisting of phosphoric acid, phosphate, and phosphoric acid aqueous solution.
